# EUROPÄISCHE PATENTSCHRIFT

(11) **EP 3 564 058 B1**
(45) Veröffentlichungstag und Bekanntmachung des Hinweises auf die Patenterteilung: **17.08.2022**
(21) Anmeldenummer: 19169308.4
(22) Anmeldetag: 15.04.2019
(51) Int. Cl.: B60K 35/00, G03B 21/14, B60K 37/02, H04N 9/31

(54) **KRAFTWAGEN MIT EINER PROJEKTIONSVORRICHTUNG SOWIE VERFAHREN ZUM BETREIBEN EINER SOLCHEN PROJEKTIONSVORRICHTUNG**
MOTOR VEHICLE WITH PROJECTION DEVICE AND METHOD FOR OPERATING SUCH A PROJECTION DEVICE
VÉHICULE AUTOMOBILE AVEC DISPOSITIF DE PROJECTION AINSI QUE PROCÉDÉ DE FONCTIONNEMENT D'UN TEL DISPOSITIF DE PROJECTION

(30) Priorität: 04.05.2018 DE 102018206988
(43) Veröffentlichungstag der Anmeldung: 06.11.2019
(73) Patentinhaber: Audi AG, 85045 Ingolstadt (DE)
(72) Erfinder: Hottinger, Alexander, 85051 Ingolstadt (DE); Lehmann, Nadine, 80335 München (DE); van Tuijl, Mattijs, 85055 Ingolstadt (DE); Wu, Yunzhou, Beijing 100126 (CN); Tontsch, Friedrich-Uwe, 85051 Ingolstadt (DE); Kastner, Julia, 92339 Beilngries (DE); Schmitz, Christoph, 93326 Abensberg (DE)

(56) Entgegenhaltungen:
- WO-A1-2013/005857
- WO-A1-2017/092199
- DE-A1-102007 058 795
- DE-A1-102013 224 132

## Beschreibung

Die Erfindung betrifft einen Kraftwagen mit einer Projektionsvorrichtung sowie ein Verfahren zum Betreiben einer solchen Projektionsvorrichtung gemäß dem Oberbegriff von Patentanspruch 6.

Eine solche Projektionsvorrichtung sowie ein Verfahren zum Betreiben einer solchen Projektionsvorrichtung für einen Kraftwagen, insbesondere für einen Personenkraftwagen, sind bereits hinlänglich aus dem allgemeinen Stand der Technik und insbesondere aus dem Serienfahrzeugbau bekannt. Die Projektionsvorrichtung wird beispielsweise als so genanntes Head-Up-Display (HUD) verwendet, um im Innenraum des jeweiligen Kraftwagens Informationen optisch darzustellen. Hierzu umfasst die Projektionsvorrichtung ein in dem Innenraum des jeweiligen Kraftwagens angeordnetes Abbildungselement, welches üblicherweise eine Windschutzscheibe des jeweiligen Kraftwagens oder aber ein in teilweiser Überlappung mit der Windschutzscheibe angeordneter und separat von der Windschutzscheibe ausgebildeter Combiner ist. Der Combiner ist dabei üblicherweise an einer Instrumententafel angeordnet. Das Abbildungselement weist wenigstens eine Abbildungsfläche auf. Außerdem umfasst die Projektionsvorrichtung wenigstens ein in dem Innenraum angeordnetes Projektionselement zum Projizieren wenigstens eines virtuellen Bilds auf die Abbildungsfläche. Mit anderen Worten ist das wenigstens einen Projektionselement dazu ausgebildet, wenigstens ein virtuelles Bild auf die Abbildungsfläche zu projizieren.

Des Weiteren offenbart die DE 10 2006 000 777 A1 eine Zutrittssteuervorrichtung, um einem Fahrer oder Fahrgast einen Zugang zu einem Fahrzeug zu ermöglichen. Der DE 10 2012 022 651 A1 ist ein Gangwahlhebel für ein Kraftfahrzeug als bekannt zu entnehmen. Außerdem ist aus der DE 10 2014 002 305 A1 ein Kraftfahrzeug bekannt.

Die DE 10 2013 224 132 A1 offenbart eine Projektionsvorrichtung zum Projizieren eines optischen Elements. Der DE 10 2007 058 795 A1 ist eine Anzeigeeinrichtung für ein Kraftfahrzeug als bekannt zu entnehmen. Aus der WO 2013/005857 A1 ist eine Projiziereinrichtung bekannt. Die WO 2017/092199 A1 offenbart ein Projektionsverfahren.

Aufgabe der vorliegenden Erfindung ist es, , einen Kraftwagen und ein Verfahren zum Betreiben einer Projektionsvorrichtung zu schaffen, sodass im Innenraum des Kraftwagens Informationen besonders vorteilhaft optisch dargestellt werden können.

Diese Aufgabe wird erfindungsgemäß durch einen Kraftwagen mit den Merkmalen des Patentanspruchs 1 sowie durch ein Verfahren mit den Merkmalen des Patentanspruchs 6gelöst. Vorteilhafte Ausgestaltungen mit zweckmäßigen Weiterbildungen der Erfindung sind in den übrigen Ansprüchen angegeben.

Ein erster Aspekt der Erfindung betrifft einen vorzugsweise als Personenkraftwagen ausgebildeten Kraftwagen mit einer Projektionsvorrichtung. Die Projektionsvorrichtung weist wenigstens ein im Innenraum des Kraftwagens angeordnetes Abbildungselement auf, welches wenigstens eine Abbildungsfläche aufweist. Außerdem weist die Projektionsvorrichtung wenigstens ein im Innenraum angeordnetes Projektionselement zum Projizieren wenigstens eines virtuellen Bilds auf die Abbildungsfläche auf. Mit anderen Worten ist das wenigstens eine Projektionselement dazu ausgebildet, wenigstens ein virtuelles Bild auf die Abbildungsfläche zu projizieren. Wieder mit anderen Worten ausgedrückt ist das wenigstens eine Projektionselement dazu ausgebildet, wenigstens ein projiziertes und somit virtuelles Bild auf der Abbildungsfläche zu erzeugen. Dabei ist das Projektionselement insbesondere dazu ausgebildet, Licht auszustrahlen, um dadurch das virtuelle Bild auf die Abbildungsfläche zu projizieren.

Um nun im Innenraum des Kraftwagens Informationen besonders vorteilhaft optisch darstellen und somit beispielsweise dem Fahrer des Kraftwagens optisch kommunizieren zu können, ist es vorgesehen, dass das die Abbildungsfläche aufweisende beziehungsweise bildende Abbildungselement als eine in Fahrzeugquerrichtung zwischen zwei Fahrzeugsitzen angeordnete Mittelkonsole des Kraftwagens ausgebildet ist. Einer der Fahrzeugsitze ist beispielsweise der Fahrersitz, wobei der andere Fahrzeugsitz der Beifahrersitz ist. Der Erfindung liegt die Erkenntnis zugrunde, dass die Mittelkonsole besonders vorteilhaft von dem Fahrer optisch wahrgenommen werden kann und insbesondere während einer Fahrt oft von dem Fahrer betrachtet wird, da der Fahrer beispielsweise an oder in der Nähe der Mittelkonsole angeordnete Bedienelemente bedient. Insbesondere kann der Fahrer während einer Fahrt kurz auf die Mittelkonsole und somit auf deren Abbildungsfläche blicken, ohne dass der Fahrer übermäßig abgelenkt wird. Somit ermöglicht es die Erfindung, den Fahrer mittels des projizierten und somit virtuellen Bilds Informationen optisch kommunizieren zu können, ohne dass der Fahrer abgelenkt wird.

Das virtuelle Bild ist ein projiziertes Bild beziehungsweise wird auch als projiziertes Bild bezeichnet, da es mittels des wenigstens einen Projektionselements auf die Abbildungsfläche projiziert wird. Somit wird das virtuelle Bild auch als Projektion bezeichnet. Projektionen haben den Vorteil, dass Licht zum Erzeugen der jeweiligen Projektion in Bereiche gelenkt beziehungsweise geführt werden kann, um in diesen Bereichen anhand der jeweiligen Projektion Inhalte optisch darstellen und somit optisch kommunizieren zu können, wobei in diesen Bereichen für herkömmliche, elektronische Bildschirme kein Bauraum zur Verfügung steht. Insbesondere durch eine Optik kann das Licht zum Projizieren beziehungsweise Erzeugen des virtuellen Bilds bedarfsgerecht gelenkt beziehungsweise geführt oder umgelenkt werden, um einen Lichtweg, entlang welchem das Licht zum Erzeugen des virtuellen Bilds geführt wird, bedarfsgerecht ausgestalten zu können. Somit kann eine zumindest nahezu freie Einbaulage des wenigstens einen Projektionselements gewählt werden. Insbesondere kann die Einbaulage des wenigstens einen Projektionselements zumindest im Wesentlichen unabhängig von der Abbildungsfläche, insbesondere von deren Position im Innenraum, gewählt werden. Die Optik umfasst dabei beispielsweise wenigstens ein Prisma oder mehrere Prismen, um beispielsweise das Licht zum Erzeugen des virtuellen Bilds, insbesondere um 90 Grad, umzulenken. Alternativ oder zusätzlich kann die Optik dazu ausgebildet sein, das Licht um mehr oder weniger 90 Grad umzulenken. In der Folge kann das virtuelle Bild besonders vorteilhaft beziehungsweise an besonders vorteilhaften Stellen erzeugt werden. Um beispielsweise mittels des virtuellen Bilds wenigstens eine Information besonders vorteilhaft optisch darstellen und somit dem Fahrer optisch kommunizieren zu können, umfasst das virtuelle Bild beispielsweise wenigstens eine Zahl und/oder wenigstens einen Buchstaben und/oder wenigstens ein von einer Zahl und von einem Buchstaben unterschiedliches Symbol.

Um dabei das projizierte Bild besonders vorteilhaft erzeugen und optisch kommunizieren zu können, ist es ferner vorgesehen, dass die Projektionsvorrichtung eine Erfassungseinrichtung aufweist, mittels welcher wenigstens ein im Innenraum angeordnetes Objekt erfassbar ist. Bei dem Objekt kann es sich beispielsweise um eine Person, insbesondere um eine Gliedmaße oder um einen Teil einer Gliedmaße einer sich im Innenraum aufhaltenden Person, oder um einen Gegenstand handeln, sodass mittels der Erfassungseinrichtung wenigstens eine sich im Innenraum aufhaltende Person und/oder wenigstens ein im Innenraum angeordneter Gegenstand erfasst werden kann. Dabei ist das wenigstens eine Projektionselement in Abhängigkeit von dem erfassten Objekt betreibbar. Mit anderen Worten ist das wenigstens eine Projektionselement dazu ausgebildet, das Licht zum Erzeugen zumindest eines Teils des virtuellen Bilds in Abhängigkeit von dem erfassten Objekt auszusenden, das heißt bereitzustellen. Hierzu stellt beispielsweise die Erfassungseinrichtung wenigstens ein das erfasste Objekte charakterisierendes, insbesondere elektrisches, Signal bereit, welches beispielsweise von dem wenigstens einen Projektionselement empfangen wird. Insbesondere ist es denkbar, dass das Signal von eine elektronischen Recheneinrichtung empfangen wird. In Abhängigkeit von dem empfangenen Signal erzeugt die elektronische Recheneinrichtung wenigstens ein, insbesondere elektrisches, Ansteuersignal, welches an das wenigstens eine Projektionselement übertragen und von dem wenigstens einen Projektionselement empfangen wird. Mittels des Ansteuersignals wird das wenigstens eine Projektionselement angesteuert beziehungsweise betrieben, sodass das wenigstens eine Projektionselement mittels des Ansteuersignals in Abhängigkeit von dem erfassten Objekt angesteuert beziehungsweise betrieben werden kann.

Um dabei eine schattenfreie Projektion des virtuellen Bildes auf die Abbildungsfläche zu realisieren, ist es außerdem vorgesehen, dass das wenigstens eine Projektionselement dazu ausgebildet ist, Licht in wenigstens einem Aussendebereich auszustrahlen, um dadurch das virtuelle Bild auf die Abbildungsfläche zu projizieren. Wenn beispielsweise mittels der Erfassungseinrichtung ermittelt beziehungsweise erfasst wird, dass zumindest ein Teilbereich des mittels der Erfassungseinrichtung erfassten Objekts in einem ersten Teil des Aussendebereiches angeordnet ist, so unterlässt beziehungsweise unterbindet das wenigstens eine Projektionselement das Aussenden von Licht in dem ersten Teil des Aussendebereiches. Während das wenigstens eine Projektionselement das Aussenden von Licht im ersten Teil des Aussendebereiches unterlässt beziehungsweise unterbindet, sendet das wenigstens eine Projektionselement in einem sich an den ersten Teil anschließenden zweiten Teil des Aussendebereiches Licht aus, um dadurch einen, insbesondere gegenüber dem virtuellen Bild kleineren, Bildteil des virtuellen Bildes auf die Abbildungsfläche zu projizieren. Dies bedeutet, dass das wenigstens eine Projektionselement den in dem Aussendebereich angeordneten Teilbereich des Objekts beziehungsweise das Objekt insgesamt ausnimmt beziehungsweise ausspart, sodass kein von dem wenigstens einen Projektionselement ausgesendeten Licht auf den Teilbereich beziehungsweise auf das Objekt insgesamt fällt. Mit anderen Worten wird dadurch verhindert, dass das virtuelle Bild beziehungsweise ein Teil des virtuellen Bilds auf das Objekt beziehungsweise auf den Teilbereich projiziert wird. Hierdurch kann ein Schattenwurf vermieden werden, zu welchem es kommen kann, wenn das wenigstens eine Projektionselement den Teilbereich des Objekts mit Licht anstrahlen würde.

Insbesondere ist die Erfassungseinrichtung dazu ausgebildet, eine Position des Objekts im Innenraum zu ermitteln, sodass das wenigstens eine Projektionselement in Abhängigkeit von der ermittelten Position des Objekts betreibbar ist. Alternativ oder zusätzlich ist es denkbar, dass die Erfassungseinrichtung dazu ausgebildet ist, eine Helligkeit im Innenraum und/oder eine Helligkeit in der Umgebung des Kraftwagens zu ermitteln, sodass das wenigstens eine Projektionselement in Abhängigkeit von der ermittelten beziehungsweise erfassten Helligkeit betreibbar ist. Alternativ oder zusätzlich ist es vorzugsweise vorgesehen, dass das Projektionselement in Abhängigkeit von wenigstens einem einen Zustand des wenigstens einen Projektionselements charakterisierenden Zustandswert betreibbar ist beziehungsweise betrieben wird. Der Zustandswert charakterisiert beispielsweise ein Alter des wenigstens einen Projektionselements. Dieser Ausführungsform liegt die Erkenntnis zugrunde, dass sich mittels Projektionselementen ausstrahlbares Licht, insbesondere dessen Farbe, mit zunehmendem Alter des jeweiligen Projektionselements verändern kann. Insbesondere kann die Farbe Rot schnell altern.

Durch Berücksichtigung des Alters des wenigstens einen Projektionselements können Kompensationsmaßnahmen erfolgen, sodass beispielsweise das virtuelle Bild auch über eine hohe Lebensdauer des wenigstens einen Projektionselements hinweg stets das gleiche, von sich im Innenraum aufhaltenden Personen optisch wahrnehmbare Erscheinungsbild aufweist. Alternativ oder zusätzlich ist das wenigstens einen Projektionselements in Abhängigkeit von einer Position des wenigstens einen Projektionselements, insbesondere im Innenraum und/oder in Relation zu der Abbildungsfläche, betreibbar. Die Position des wenigstens einen Projektionselements kann beispielsweise mittels der Erfassungseinrichtung erfasst werden und/oder ist in einer Speichereinrichtung der zuvor genannten elektronischen Recheneinrichtung gespeichert.

Der Aussendebereich wird auch als Abstrahlbereich des auch als Beamer bezeichneten wenigstens einen Projektionselements bezeichnet. Dabei ist beispielsweise das wenigstens eine Projektionselement in Abhängigkeit von wenigstens einem den Abstrahlbereich charakterisierenden Bereichswert betreibbar, wobei der Bereichswert beispielsweise in der elektronischen Recheneinrichtung gespeichert ist. Der Bereichswert charakterisiert beispielsweise wenigstens eine oder mehrere räumliche Abmessungen oder Ausdehnungen des Abstrahlbereichs, sodass besonders vorteilhaft eine Ausrichtung beziehungsweise Position oder Stellung des erfassten Objekts in Relation zu dem Aussendebereich ermittelt werden kann. Insbesondere kann in Abhängigkeit von dem Bereichswert und in Abhängigkeit von dem erfassten Objekt, insbesondere in Abhängigkeit von dessen erfasster Position im Innenraum, ermittelt werden, ob sich das Objekt in dem Aussendebereich befindet.

Des Weiteren weist die Projektionsvorrichtung zumindest ein im Innenraum angeordnetes zweites Projektionselements auf. Um das wenigstens eine Projektionselement begrifflich eindeutig von dem zweiten Projektionselement unterscheiden zu können, wird das wenigstens eine Projektionselement auch als erstes Projektionselement bezeichnet. Die folgenden und vorherigen Ausführungen zum ersten Projektionselement sind, sinngemäß, auf das zweite Projektionselement übertragbar und umgekehrt. Somit kann beispielsweise das zweite Projektionselement Licht aussenden beziehungsweise ausstrahlen, um dadurch ein zweites virtuelles Bild auf die Abbildungsfläche zu projizieren. Dabei ist das zweite Projektionselement dazu ausgebildet, das zweite virtuelle Bild auf die Abbildungsfläche zu projizieren, während das wenigstens eine Projektionselement mittels des in dem zweiten Teil des Aussendebereiches ausgesendeten Lichts den Bildteil des ersten virtuellen Bildes auf die Abbildungsfläche projiziert. Hierdurch ergänzt das zweite virtuelle Bild den mittels des wenigstens einen Projektionselements auf die Abbildungsfläche projizierten Bildteil zu einem auf die Abbildungsfläche projizierten virtuellen Gesamtbild.

Ist beispielsweise der Aussendebereich frei von Objekten, auf die von dem ersten Projektionselement ausgestrahltes Licht zum Projizieren des ersten virtuellen Bilds auftreffen könnte, so kann beispielsweise das ersten Projektionselement das erste virtuelle Bild, insbesondere in Gänze, auf die Abbildungsfläche projizieren. Ist nun jedoch der zuvor genannte Teilbereich des Objekts beziehungsweise das Objekt insgesamt in dem ersten Teil des Aussendebereichs angeordnet, während der zweite Aussendebereich frei von Objekten ist, so strahlt das erste Projektionselement in dem zweiten Teil des Aussendebereichs Licht aus, während es in dem ersten Teil kein Licht aussendet. Dadurch projiziert das erste Projektionselement den genannten Bildteil auf die Abbildungsfläche. Das erste virtuelle Bild ist beispielsweise in Gänze gebildet durch den ersten Bildteil und durch einen zweiten Bildteil, sodass der erste Bildteil und der zweite Bildteil in Gänze beziehungsweise zusammen oder in Summe das erste virtuelle Bild ergeben. Da nun jedoch beispielsweise das erste Projektionselement in dem ersten Teil des Aussendebereichs kein Licht aussendet, unterbleibt ein mittels des ersten Projektionselements bewirktes Projizieren des zweiten Bildteils auf die Abbildungsfläche, während das erste Projektionselement den ersten Bildteil auf die Abbildungsfläche projiziert. Somit wird nicht das gesamte erste virtuelle Bild auf die Abbildungsfläche mittels des ersten Projektionselements projiziert, sondern das erste Projektionselement projiziert von dem ersten virtuellen Bild nur den ersten Bildteil auf die Abbildungsfläche.

Dabei ist an der Mittelkonsole ein Wählhebel zum Auswählen von Gängen und/oder Fahrstufen eines Getriebes des Kraftwagens bewegbar gehalten. Durch Bewegen des Wählhebels relativ zu der Mittelkonsole kann beispielsweise der Fahrer des Kraftwagens jeweilige Gänge beziehungsweise Fahrstufen des Getriebes auswählen.

Dabei ist das zweite Projektionselement an dem Wählhebel gehalten. Das zweite Projektionselement ist somit mit dem Wählhebel mit bewegbar.

Um dabei ein von wenigstens einer sich im Innenraum aufhaltenden Person optisch wahrnehmbares und logisches beziehungsweise nachvollziehbares Bild zu erzeugen, wird der erste Bildteil, der mittels des ersten Projektionselements auf die Bildfläche projiziert wird, durch das zweite virtuelle Bild zu dem virtuellen Gesamtbild ergänzt. Somit tritt zumindest ein Teil des zweiten virtuellen Bilds an die Stelle des zweiten Bildteils, welcher nicht mittels des ersten Projektionselements auf die Abbildungsfläche projiziert wird beziehungsweise projiziert werden kann. Mit anderen Worten projiziert beispielsweise das zweite Projektionselement den zweiten Bildteil auf die Abbildungsfläche, sodass der erste Bildteil und der zweite Bildteil das erste virtuelle Bild bilden, welches mittels des ersten Projektionselements auf die Abbildungsfläche projiziert werden kann, wenn der Aussendebereich des ersten Projektionselements frei von Objekten ist. Hierdurch kann eine besonders vorteilhafte und insbesondere schattenfreie Projektion des virtuellen Gesamtbilds beziehungsweise des ersten virtuellen Bilds gewährleistet werden, insbesondere dann, wenn sich in dem Aussendebereich des ersten Projektionselements ein oder mehrere Objekte befinden.

Dabei hat es sich als besonders vorteilhaft gezeigt, wenn der erste Bildteil und das zweite virtuelle Bild auf der Abbildungsfläche überdeckungsfrei zueinander angeordnet sind und lückenlos aneinander anschließen. Hierdurch kann das virtuelle Gesamtbild lückenlos dargestellt werden, wodurch anhand des virtuellen Gesamtbilds dem Fahrer des Kraftwagens beziehungsweise wenigstens einer sich im Innenraum des Kraftwagens aufhaltenden Person besonders vorteilhaft Informationen optisch kommuniziert werden können.

Eine weitere Ausführungsform zeichnet sich dadurch aus, dass sich der erste Bildteil und das zweite virtuelle Bild auf der Abbildungsfläche in jeweiligen Überlappungsbereichen gegenseitig überlappen. Hierdurch können unerwünschte Lücken beziehungsweise Unterbrechungen des virtuellen Gesamtbilds sicher vermieden werden, sodass das virtuelle Gesamtbild besonders vorteilhaft dargestellt werden kann.

In weiterer Ausgestaltung der Erfindung entspricht das virtuelle Gesamtbild dem ersten virtuellen Bild, welches mittels des ersten Projektionselements durch sowohl im ersten Teil als auch im zweiten Teil gleichzeitig stattfindendes Ausstrahlen von Licht auf die Abbildungsfläche projiziert werden kann. Somit bildet beispielsweise das zweite virtuelle Bild beziehungsweise zumindest ein Teil des zweiten virtuellen Bilds den zweiten Bildteil, welcher nicht mittels des ersten Projektionselements auf die Abbildungsfläche projiziert werden kann.

In weiterer Ausgestaltung der Erfindung ist das wenigstens eine Projektionselement an dem Wählhebel gehalten, sodass das erste Projektionselement mit dem Wählhebel mit bewegbar ist.

Weiterhin hat es sich als besonders vorteilhaft gezeigt, wenn das jeweilige Projektionselement in Abhängigkeit von einer jeweiligen Stellung des Wählhebels, insbesondere relativ zur Mittelkonsole, betreibbar ist. Der Wählhebel kann beispielsweise in mehrere, voneinander unterschiedliche und auch als Wählhebelstellungen bezeichnete Stellungen relativ zu der Mittelkonsole bewegt werden. Dabei wird beispielsweise mittels der zuvor genannten elektronischen Recheneinrichtung die jeweilige Wählhebelstellung erfasst. In der Folge wird beispielsweise das jeweilige Projektionselement in Abhängigkeit von der jeweiligen, erfassten Wählhebelstellung betreiben, sodass das jeweilige Projektionselement das Licht in Abhängigkeit von der erfassten Wählhebelstellung ausstrahlt und somit bereitstellt. Hierdurch können beispielsweise unerwünschte Änderungen des ersten virtuellen Bilds beziehungsweise des virtuellen Gesamtbilds vermieden werden, wenn der Wählhebel relativ zu der Mittelkonsole bewegt wird.

Ein zweiter Aspekt der Erfindung betrifft ein Verfahren zum Betreiben einer Projektionsvorrichtung eines Kraftwagens, insbesondere einer erfindungsgemäßen Projektionsvorrichtung gemäß dem ersten Aspekt der Erfindung. Bei dem Verfahren wird mittels wenigstens eines im Innenraum des Kraftwagens angeordneten Projektionselements des Kraftwagens wenigstens ein virtuelles Bild auf eine Abbildungsfläche eines im Innenraum angeordneten Abbildungselements projiziert.

Um dabei das virtuelle Bild besonders vorteilhaft darstellen und somit Informationen besonders vorteilhaft optisch kommunizieren zu können, ist es erfindungsgemäß vorgesehen, dass als das Abbildungselement eine in Fahrzeugquerrichtung zwischen zwei Fahrzeugsitzen angeordnete Mittelkonsole des Kraftwagens verwendet wird. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Bei dem zweiten Aspekt weist die Projektionsvorrichtung eine Erfassungseinrichtung auf, mittels welcher wenigstens ein im Innenraum angeordnetes Objekt erfasst wird, wobei das wenigstens eine Projektionselement in Abhängigkeit von dem erfassten Objekt betrieben wird. Das wenigstens eine Projektionselement stellt in wenigstens einem Aussendebereich Licht aus, um da durch das virtuelle Bild auf die Abbildungsfläche zu projizieren. Wenn zumindest ein Teilbereich des erfassten Objekts in einem ersten Teil des Aussendebereichs angeordnet ist, unterlässt das wenigstens eine Projektionselement das Aussenden von Licht in dem ersten Teil. Währenddessen sendet das wenigstens eine Projektionselement Licht in einen sich an den ersten Teil anschließenden zweiten Teil des Aussendebereichs aus, um dadurch einen Bildteil des virtuellen Bildes auf die Abbildungsfläche zu projizieren, wobei die Projektionsvorrichtung zumindest ein im Innenraum angeordnetes zweites Projektionselement aufweist, welches dazu ausgebildet ist, ein zweites virtuelles Bild auf die Abbildungsfläche zu projizieren, während das wenigstens einen Projektionselement mittels des in dem zweiten Teil des Aussendebereichs ausgesendeten Lichts den Bildteil des ersten virtuellen Bildes auf die Abbildungsfläche projiziert, wodurch das zweite virtuelle Bild den mittels des wenigstens einen Projektionselements auf die Abbildungsfläche projizierten Bildteil zu einem auf die Abbildungsfläche projizierten Gesamtbild ergänzt. An der Mittelkonsole ist ein Wählhebel zum Auswählen von Gängen und/oder Fahrstufen eines Getriebes des Kraftwagens bewegbar gehalten, wobei das zweite Projektionselement an dem Wählhebel gehalten ist.

Die Erfindung umfasst auch die Kombinationen der Merkmale der beschriebenen Ausführungsformen. Zu der Erfindung gehören auch Weiterbildungen des erfindungsgemäßen Verfahrens, die Merkmale aufweisen, wie sie bereits im Zusammenhang mit den Weiterbildungen der erfindungsgemäßen Projektionsvorrichtung beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt die einzige Fig. eine schematische Perspektivansicht einer erfindungsgemäßen Projektionsvorrichtung für einen Kraftwagen.

Bei dem im Folgenden erläuterten Ausführungsbeispiel handelt es sich um eine bevorzugte Ausführungsform der Erfindung. Bei den Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebenen Ausführungsform auch durch weitere der bereits beschriebenen Merkmale der Erfindung ergänzbar.

Die einzige Fig. zeigt in einer schematischen Perspektivansicht eine Projektionsvorrichtung 10 für einen Kraftwagen, welcher vorzugsweise als Personenkraftwagen ausgebildet ist. Die Projektionsvorrichtung 10 weist ein im Innenraum 12 des Kraftwagens angeordnetes Abbildungselement 14 auf, welches wenigstens eine Abbildungsfläche 16 aufweist. Außerdem umfasst die Projektionsvorrichtung 10 wenigstens ein im Innenraum 12 angeordnetes erstes Projektionselement 18 zum Projizieren wenigstens eines virtuellen Bilds 20 auf die Abbildungsfläche 16.

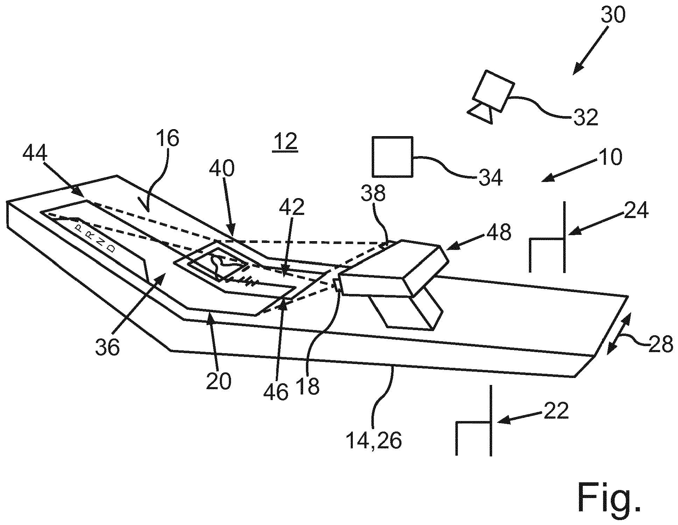

Um nun das auch als erstes virtuelles Bild bezeichnete virtuelle Bild 20 im Innenraum 12 besonders vorteilhaft optisch darstellen und somit beispielsweise wenigstens einer sich im Innenraum 12 aufhaltenden Person wie dem Fahrer des Kraftwagens kommunizieren zu können, ist das Abbildungselement 14 als eine in Fahrzeugquerrichtung zwischen zwei in der Fig. besonders schematisch dargestellten Fahrzeugsitzen 22 und 24 angeordnete Mittelkonsole 26 des Kraftwagens ausgebildet. Dabei ist die Fahrzeugquerrichtung in der Fig. durch einen Doppelpfeil 28 veranschaulicht.

Vorzugsweise weist die Projektionsvorrichtung 10 wenigstens eine Erfassungseinrichtung 30 auf, mittels welcher wenigstens ein im Innenraum 12 angeordnetes Objekt erfassbar ist beziehungsweise erfasst werden kann. Dabei ist das Projektionselement 18, welches auch als erster Beamer bezeichnet wird, in Abhängigkeit von dem erfassten Objekt betreibbar. Beispielsweise umfasst die Erfassungseinrichtung 30 wenigstens eine Kamera 32, mittels welcher Bilder zumindest eines Teilbereichs des Innenraums 12 erfasst werden können. Die Bilder können beispielsweise mittels einer in der Fig. besonders schematisch dargestellten elektronischen Recheneinrichtung 34 der Erfassungseinrichtung 30 beziehungsweise der Projektionsvorrichtung 10 einer Bildverarbeitung unterzogen werden. Wird beispielsweise anhand wenigstens eines der Bilder das zuvor genannte Objekt erfasst, so kann die elektronische Recheneinrichtung 34 das Projektionselement 18 in Abhängigkeit von dem erfassten Objekt ansteuern und somit betreiben, insbesondere steuern oder regeln.

Das Projektionselement 18 ist dabei dazu ausgebildet, Licht in einem insbesondere dreidimensionalen Aussendebereich 36 auszustrahlen, um dadurch mittels des in dem Aussendebereich 36 ausgestrahlten Lichts das virtuelle Bild 20 auf die Abbildungsfläche 16 zu projizieren. Wird nun beispielsweise das zuvor genannte Objekt mittels der Erfassungseinrichtung 30 erfasst und wird dabei, insbesondere mittels der Recheneinrichtung 34, ermittelt beziehungsweise erfasst, dass sich das Objekt beziehungsweise dass sich zumindest ein Teilbereich des erfassten Objekts in einem ersten Teil des Aussendebereichs 36 befindet, so sendet das Projektionselement 18 in dem ersten Teil des Aussendebereichs 36 kein Licht aus, während des Projektionselement 18 in einem sich an den ersten Teil anschließenden zweiten Teil des Aussendebereichs 36 Licht aussendet. Dadurch projiziert das Projektionselement 18 mittels des in dem zweiten Teil ausgesendet beziehungsweise ausgestrahlten Lichts einen ersten Bildteil des virtuellen Bildes 20 auf die Abbildungsfläche 16. Ist der Aussendebereich 36 beispielsweise frei von Objekten, so sendet das Projektionselement 18 sowohl im ersten Teil als auch in dem zweiten Teil des Aussendebereichs 36 Licht aus, um dadurch das virtuelle Bild 20 in Gänze auf die Abbildungsfläche 16 zu projizieren. Dabei ergeben beispielsweise der erste Teil und der zweite Teil in Summe den Aussendebereich 36.

Um dabei dennoch beispielsweise dem sich im Innenraum 12 aufhaltenden Fahrer Informationen optisch kommunizieren zu können, welche mittels des virtuellen Bilds 20 optisch kommuniziert werden können, umfasst die Projektionsvorrichtung 10 wenigstens ein im Innenraum 12 angeordnetes und auch als zweiter Beamer bezeichnetes zweites Projektionselement 38. Das Projektionselement 38 ist dazu ausgebildet, Licht in einem zweiten Aussendebereich 40 auszusenden beziehungsweise auszustrahlen und dadurch ein zweites virtuelles Bild 42 auf die Aussendebereich 36 zu projizieren. Zumindest jeweilige Teile der Aussendebereiche 36 und 40 sind überlappungsfrei beziehungsweise Überdeckungsfrei zueinander angeordnet. Während nun das Projektionselement 18 in den ersten Teil des Aussendebereichs 36 kein Licht ausstrahlt und in dem zweiten Teil des Aussendebereichs 36 Licht ausstrahlt, wodurch das Projektionselement 18 mittels des im zweiten Teil des Aussendebereichs 36 ausgesendeten Lichts den zuvor genannten ersten Bildteil des ersten virtuellen Bildes 20 auf die Abbildungsfläche 16 projiziert, projiziert das Projektionselement 38 das zweite virtuelle Bild auf die Abbildungsfläche 16, wodurch das zweite virtuelle Bild den mittels des Projektionselements 18 auf die Abbildungsfläche 16 projizierten Bildteil zu einem auf die Abbildungsfläche 16 projizierten virtuellen Gesamtbild 44 ergänzt.

Ist der Aussendebereich 36 beispielsweise frei von Objekten, so kann das Projektionselement 18 das virtuelle Bild 20 in Gänze auf die Abbildungsfläche 16 projizieren, sodass das Projektionselement 18 sowohl den ersten Bildteil als auch beispielsweise einen zweiten Bildteil des ersten virtuellen Bilds 20 auf die Abbildungsfläche 16 projizieren kann beziehungsweise projiziert. Der erste Bildteil und der zweite Bildteil des virtuellen Bildes 20 ergeben in Summe das virtuelle Bild 20 in Gänze. Befindet sich nun das Objekt jedoch in dem ersten Teil des Aussendebereichs 36, so strahlt das Projektionselement 18 bezogen auf die Teile des Aussendebereichs 36 nur in dem zweiten Teil des Aussendebereichs 36 Licht aus, sodass das Projektionselement 18 bezogen auf die Bildteile des virtuellen Bilds 20 nur den ersten Bildteil auf die Abbildungsfläche 16 projiziert. Der zweite Bildteil wird nicht mittels des Projektionselements 18 auf die Abbildungsfläche 16 projiziert.

Um dennoch beispielsweise das virtuelle Bild 20 in Gänze darzustellen, tritt an die Stelle des zweiten Bildteils zumindest ein Teil des zweiten virtuellen Bilds 42, sodass zumindest der Teil des zweiten virtuellen Bilds 42 den ersten Bildteil zu dem virtuellen Bild 20 ergänzt. Der mittels des Projektionselements 18 auf die Abbildungsfläche 16 projizierte erste Bildteil und das zweite virtuelle Bild 42 ergeben in Summe beziehungsweise zusammen das Gesamtbild 44, welches beispielsweise größer als das virtuelle Bild 20 und das virtuelle Bild 42 jeweils einzeln betrachtet ist. Aus der Fig. ist erkennbar, dass das virtuelle Bild 42 beispielsweise zumindest einen dritten Bildteil und einen vierten Bildteil aufweisen kann, wobei der dritte Bildteil und der vierte Bildteil in Summe das zweite virtuelle Bild 42 ergeben. Dabei ergänzt beispielsweise der dritte Bildteil den ersten Bildteil zum virtuellen Bild 20, und der vierte Bildteil ergänzt den dritten Bildteil zum virtuellen Bild 42. Insgesamt ergeben somit beispielsweise der erste Bildteil, der dritte Bildteil und der vierte Bildteil in Summe das Gesamtbild 44, wobei das virtuelle Bild 20 zumindest ein Teil des Gesamtbilds 44 ist, oder aber das virtuelle Bild 20 entspricht dem Gesamtbild 44.

Bei dem in der Fig. veranschaulichten Ausführungsbeispiel jedoch ist beispielsweise der vierte Bildteil des virtuellen Bilds 42 ein nicht zum virtuellen Bild 20 gehörender Bildteil, sodass das virtuelle Gesamtbild 44 größer als das einzelne virtuelle Bild 20 und größer als das einzelne virtuelle Bild 42 ist. Der erste Bildteil und das zweite virtuelle Bild 42 können auf der Abbildungsfläche 16 überdeckungsfrei zueinander angeordnet sein und sich dabei lückenlos aneinander anschließen, oder aber der erste Bildteil und das zweite virtuelle Bild 42 überlappen sich auf der Abbildungsfläche 16 in jeweiligen Überlappungsbereichen 46.

Des Weiteren ist es bei der Projektionsvorrichtung 10 vorgesehen, dass an der Mittelkonsole 26 ein Wählhebel 48 zum Auswählen von Gängen und/oder Fahrstufen eines Getriebes des Kraftwagens bewegbar gehalten ist. Der Wählhebel 48 kann somit in mehrere, voneinander unterschiedliche Stellungen relativ zu der Mittelkonsole 26 bewegt werden. Dabei sind sowohl das Projektionselement 18 als auch das Projektionselement 38 an dem Wählhebel 48 gehalten und somit mit dem Wählhebel 48 mit bewegbar. Insbesondere ist es möglich, dass das virtuelle Bild 20, insbesondere der erste Bildteil, wenigstens ein die aktuelle Stellung des Wählhebels 48 charakterisierendes Symbol beziehungsweise einen die aktuelle Stellung des Wählhebels 48 charakterisierenden Buchstaben aufweist beziehungsweise anzeigt, sodass beispielsweise anhand des virtuellen Bilds 20 beziehungsweise anhand des ersten Bildteils der aktuell ausgewählte Gang beziehungsweise die aktuell ausgewählte Fahrstufe des Getriebes auf die Abbildungsfläche 16 projiziert und somit optisch angezeigt wird. Alternativ oder zusätzlich ist es denkbar, mittels des virtuellen Gesamtbilds 44 Benachrichtigungen über eingehende oder eingegangene Nachrichten wie beispielsweise E-Mails, anderweitige Benachrichtigungen und/oder andere Informationen auf der Abbildungsfläche 16 und somit auf einer die Abbildungsfläche 16 bildenden Oberfläche der Mittelkonsole 26 anzuzeigen.

## Patentansprüche

1. Kraftwagen, mit einer Projektionsvorrichtung (10), welche aufweist:
- ein im Innenraum (12) des Kraftwagens angeordnetes Abbildungselement (14), welches wenigstens eine Abbildungsfläche (16) aufweist, und
- wenigstens ein im Innenraum (12) angeordnetes Projektionselement (18) zum Projizieren wenigstens eines virtuellen Bilds (20) auf die Abbildungsfläche (16), wobei das Abbildungselement (14) als eine in Fahrzeugquerrichtung (28) zwischen zwei Fahrzeugsitzen (22, 24) angeordnete Mittelkonsole (26) des Kraftwagens ausgebildet ist,
**dadurch gekennzeichnet, dass**
die Projektionsvorrichtung (10) eine Erfassungseinrichtung (30) aufweist, mittels welcher wenigstens ein im Innenraum (12) angeordnetes Objekt erfassbar ist, wobei das wenigstens eine Projektionselement (18) in Abhängigkeit von dem erfassten Objekt betreibbar ist, wobei das wenigstens eine Projektionselement (18) dazu ausgebildet ist:
- Licht in wenigstens einem Aussendebereich (36) auszustrahlen, um dadurch das virtuelle Bild (20) auf die Abbildungsfläche (16) zu projizieren; und
- wenn zumindest ein Teilbereich des erfassten Objekts in einem ersten Teil des Aussendebereiches (36) angeordnet ist, das Aussenden von Licht in dem ersten Teil zu unterlassen und währenddessen Licht in einem sich an den ersten Teil anschließenden zweiten Teil des Aussendebereiches (36) auszusenden, um dadurch einen Bildteil des virtuellen Bildes (20) auf die Abbildungsfläche (16) zu projizieren, wobei die Projektionsvorrichtung (10) zumindest ein im Innenraum (12) angeordnetes zweites Projektionselements (38) aufweist, welches dazu ausgebildet ist, ein zweites virtuelles Bild (42) auf die Abbildungsfläche (16) zu projizieren, während das wenigstens eine Projektionselement (18) mittels des in dem zweiten Teil des Aussendebereiches (36) ausgesendeten Lichts den Bildteil des ersten virtuellen Bildes (20) auf die Abbildungsfläche (16) projiziert, wodurch das zweite virtuelle Bild (42) den mittels des wenigstens einen Projektionselements (18) auf die Abbildungsfläche (16) projizierten Bildteil zu einem auf die Abbildungsfläche (16) projizierten virtuellen Gesamtbild (44) ergänzt, wobei an der Mittelkonsole (26) ein Wählhebel (48) zum Auswählen von Gängen und/oder Fahrstufen eines Getriebes des Kraftwagens bewegbar gehalten ist, und wobei das zweite Projektionselement (38) an dem Wählhebel (48) gehalten ist.

2. Kraftwagen nach Anspruch 1,
**dadurch gekennzeichnet, dass**
der Bildteil und das zweite virtuelle Bild (42) auf der Abbildungsfläche (16) überdeckungsfrei zueinander angeordnet sind und lückenlos aneinander anschließen.

3. Kraftwagen nach Anspruch 1,
**dadurch gekennzeichnet, dass**
sich der Bildteil und das zweite virtuelle Bild (42) auf der Abbildungsfläche (16) in jeweiligen Überlappungsbereichen (46) gegenseitig überlappen

4. Kraftwagen nach einem der vorhergehenden Ansprüche,
**dadurch gekennzeichnet, dass**
das virtuelle Gesamtbild (44) insgesamt dem ersten virtuellen Bild (20) entspricht, welches mittels des wenigstens einen Projektionselements (18) durch sowohl im ersten Teil als auch im zweiten Teil gleichzeitig stattfindendes Ausstrahlen von Licht auf die Abbildungsfläche (16) zu projizieren ist.

5. Kraftwagen nach einem der vorhergehenden Ansprüche,
**dadurch gekennzeichnet, dass**
das wenigstens eine Projektionselement (18) an dem Wählhebel (48) gehalten ist.

6. Verfahren zum Betreiben einer Projektionsvorrichtung (10) eines Kraftwagens, bei welchem mittels wenigstens eines im Innenraum (12) des Kraftwagens angeordneten Projektionselements (18) der Projektionsvorrichtung (10) wenigstens ein virtuelles Bild (20) auf eine Abbildungsfläche (16) eines im Innenraum (12) angeordneten Abbildungselements (14) projiziert wird, wobei als das Abbildungselement (14) eine in Fahrzeugquerrichtung (28) zwischen zwei Fahrzeugsitzen (22, 24) angeordnete Mittelkonsole (26) des Kraftwagens verwendet wird,
**dadurch gekennzeichnet, dass**
die Projektionsvorrichtung (10) eine Erfassungseinrichtung (30) aufweist, mittels welcher wenigstens ein im Innenraum (12) angeordnetes Objekt erfasst wird, wobei das wenigstens eine Projektionselement (18) in Abhängigkeit von dem erfassten Objekt betrieben wird, wobei das wenigstens eine Projektionselement (18):
- Licht in wenigstens einem Aussendebereich (36) ausstrahlt, um dadurch das virtuelle Bild (20) auf die Abbildungsfläche (16) zu projizieren; und
- wenn zumindest ein Teilbereich des erfassten Objekts in einem ersten Teil des Aussendebereiches (36) angeordnet ist, das Aussenden von Licht in dem ersten Teil unterlässt und währenddessen Licht in einem sich an den ersten Teil anschließenden zweiten Teil des Aussendebereiches (36) aussendet, um dadurch einen Bildteil des virtuellen Bildes (20) auf die Abbildungsfläche (16) zu projizieren, wobei die Projektionsvorrichtung (10) zumindest ein im Innenraum (12) angeordnetes zweites Projektionselements (38) aufweist, welches dazu ausgebildet ist, ein zweites virtuelles Bild (42) auf die Abbildungsfläche (16) zu projizieren, während das wenigstens eine Projektionselement (18) mittels des in dem zweiten Teil des Aussendebereiches (36) ausgesendeten Lichts den Bildteil des ersten virtuellen Bildes (20) auf die Abbildungsfläche (16) projiziert, wodurch das zweite virtuelle Bild (42) den mittels des wenigstens einen Projektionselements (18) auf die Abbildungsfläche (16) projizierten Bildteil zu einem auf die Abbildungsfläche (16) projizierten virtuellen Gesamtbild (44) ergänzt, wobei an der Mittelkonsole (26) ein Wählhebel (48) zum Auswählen von Gängen und/oder Fahrstufen eines Getriebes des Kraftwagens bewegbar gehalten ist, und wobei das zweite Projektionselement (38) an dem Wählhebel (48) gehalten ist.

## Claims

1. Motor vehicle, with a projection device (10), which has:
- an imaging element (14) arranged in the interior (12) of the motor vehicle and having at least one imaging surface (16), and
- at least one projection element (18) arranged in the interior (12) for projecting at least one virtual image (20) onto the imaging surface (16), wherein the imaging element (14) is configured as a centre console (26) of the motor vehicle arranged in the transverse direction (28) of the vehicle between two vehicle seats (22, 24),
**characterised in that**
the projection device (10) has a capture device (30), by means of which at least one object arranged in the interior (12) can be captured, the at least one projection element (18) being operable in dependence on the captured object, wherein the at least one projection element (18) is adapted:
- to emit light in at least one emitting region (36) to thereby project the virtual image (20) onto the imaging surface (16); and
- when at least a portion of the captured object is arranged in a first part of the emitting region (36), to refrain from emitting light in the first part and, meanwhile, to emit light in a second part of the emitting region (36) adjoining the first part, thereby projecting an image part of the virtual image (20) onto the imaging surface (16), wherein the projection device (10) has at least one second projection element (38) arranged in the interior (12) and configured to project a second virtual image (42) onto the imaging surface (16), while the at least one projection element (18) projects the image part of the first virtual image (20) onto the imaging surface (16) by means of the light emitted in the second part of the emitting region (36), whereby the second virtual image (42) supplements the image part projected onto the imaging surface (16) by means of the at least one projection element (18) to form an overall virtual image (44) projected onto the imaging surface (16), wherein a selector lever (48) for selecting gears and/or driving stages of a transmission of the motor vehicle is movably held on the centre console (26), and wherein the second projection element (38) is held on the selector lever (48).

2. Motor vehicle according to claim 1,
**characterised in that**
the image part and the second virtual image (42) are arranged on the imaging surface (16) without overlapping each other and adjoin each other without gaps.

3. Motor vehicle according to claim 1,
**characterised in that**
the image part and the second virtual image (42) overlap each other on the imaging surface (16) in respective overlap regions (46)

4. Motor vehicle according to any one of the preceding claims,
**characterised in that**
the overall virtual image (44) corresponds as a whole to the first virtual image (20) which is to be projected onto the imaging surface (16) by means of the at least one projection element (18) by emitting light simultaneously in both the first part and the second part.

5. Motor vehicle according to any one of the preceding claims,
**characterised in that**
the at least one projection element (18) is held on the selector lever (48).

6. Method for operating a projection device (10) of a motor vehicle, in which at least one virtual image (20) is projected onto an imaging surface (16) of an imaging element (14) arranged in the interior (12) of the motor vehicle by means of at least one projection element (18) of the projection device (10) arranged in the interior (12) of the motor vehicle, wherein a centre console (26) of the motor vehicle arranged in the transverse direction (28) of the vehicle between two vehicle seats (22, 24) is used as the imaging element (14),
**characterised in that**
the projection device (10) has a capture device (30) by means of which at least one object arranged in the interior (12) is captured, the at least one projection element (18) being operated in dependence on the captured object, wherein the at least one projection element (18):
- emits light in at least one emitting region (36) to thereby project the virtual image (20) onto the imaging surface (16); and
- when at least a portion of the sensed object is arranged in a first part of the emitting region (36), refrains from emitting light in the first part and meanwhile emits light in a second part of the emitting region (36) adjoining the first part, thereby projecting an image part of the virtual image (20) onto the imaging surface (16), wherein the projection device (10) has at least one second projection element (38) arranged in the interior (12) and configured to project a second virtual image (42) onto the imaging surface (16), while the at least one projection element (18) projects the image part of the first virtual image (20) onto the imaging surface (16) by means of the light emitted in the second part of the emitting region (36), whereby the second virtual image (42) supplements the image part projected onto the imaging surface (16) by means of the at least one projection element (18) to form an overall virtual image (44) projected onto the imaging surface (16), wherein a selector lever (48) for selecting gears and/or driving stages of a transmission of the motor vehicle is movably held on the centre console (26), and wherein the second projection element (38) is held on the selector lever (48).

## Revendications

1. Véhicule automobile, avec un dispositif de projection (10), lequel présente :
- un élément de représentation (14) disposé dans l'habitacle (12) du véhicule automobile, lequel présente au moins une surface de représentation (16), et
- au moins un élément de projection (18) disposé dans l'habitacle (12) pour projeter au moins une image virtuelle (20) sur la surface de représentation (16), dans lequel l'élément de représentation (14) est conçu comme une console centrale (26) du véhicule automobile disposée dans la direction transversale du véhicule (28) entre deux sièges de véhicule (22, 24),
**caractérisé en ce que**
le dispositif de projection (10) présente un dispositif de détection (30) au moyen duquel au moins un objet disposé dans l'habitacle (12) peut être détecté, dans lequel l'au moins un élément de projection (18) peut être actionné en fonction de l'objet détecté, dans lequel l'au moins un élément de projection (18) est conçu pour :
- émettre de la lumière dans au moins une zone d'extrémité extérieure (36), pour ainsi projeter l'image virtuelle (20) sur la surface de représentation (16) ; et
- lorsqu'au moins une zone partielle de l'objet détecté est disposée dans une première partie de la zone d'extrémité extérieure (36), omettre l'émission de lumière dans la première partie et, pendant ce temps, émettre de la lumière dans une seconde partie de la zone d'extrémité extérieure (36) se raccordant à la première partie, pour ainsi projeter une partie d'image de l'image virtuelle (20) sur la surface de représentation (16), dans lequel le dispositif de projection (10) présente au moins un second élément de projection (38) disposé dans l'habitacle (12), lequel est conçu pour projeter une seconde image virtuelle (42) sur la surface de représentation (16), pendant que l'au moins un élément de projection (18) projette, au moyen de la lumière émise dans la seconde partie de la zone d'extrémité extérieure (36), la partie d'image de la première image virtuelle (20) sur la surface de représentation (16), moyennant quoi la seconde image virtuelle (42) complète la partie d'image projetée sur la surface de représentation (16) au moyen de l'au moins un élément de projection (18) pour former une image globale virtuelle (44) projetée sur la surface de représentation (16), dans lequel un levier sélecteur (48) est maintenu mobile sur la console centrale (26) pour sélectionner des rapports et/ou des paliers de vitesse d'une boîte de vitesses du véhicule automobile, et dans lequel le second élément de projection (38) est maintenu sur le levier sélecteur (48).

2. Véhicule automobile selon la revendication 1,
**caractérisé en ce que**
la partie d'image et la seconde image virtuelle (42) sont disposées sur la surface de représentation (16) sans se chevaucher l'une l'autre et se raccordent l'une à l'autre sans espace.

3. Véhicule automobile selon la revendication 1,
**caractérisé en ce que**
la partie image et la seconde image virtuelle (42) se chevauchent mutuellement sur la surface de représentation (16) dans des zones de chevauchement respectives (46).

4. Véhicule automobile selon l'une quelconque des revendications précédentes,
**caractérisé en ce que**
l'image globale virtuelle (44) correspond globalement à la première image virtuelle (20), laquelle doit être projetée sur la surface de représentation (16) au moyen de l'au moins un élément de projection (18) en émettant de la lumière simultanément aussi bien dans la première partie que dans la seconde partie.

5. Véhicule automobile selon l'une quelconque des revendications précédentes,
**caractérisé en ce que**
l'au moins un élément de projection (18) est maintenu sur le levier sélecteur (48).

6. Procédé de fonctionnement d'un dispositif de projection (10) d'un véhicule automobile, dans lequel au moins une image virtuelle (20) est projetée sur une surface de représentation (16) d'un élément de représentation (14) disposé dans l'habitacle (12) au moyen d'au moins un élément de projection (18) du dispositif de projection (10) disposé dans l'habitacle (12), dans lequel une console centrale (26) du véhicule automobile disposée dans la direction transversale du véhicule (28) entre deux sièges de véhicule (22, 24) est utilisée comme élément de représentation (14),
**caractérisé en ce que**
le dispositif de projection (10) présente un dispositif de détection (30) au moyen duquel au moins un objet disposé dans l'habitacle (12) est détecté, dans lequel l'au moins un élément de projection (18) est actionné en fonction de l'objet détecté, dans lequel l'au moins un élément de projection (18) :
- émet de la lumière dans au moins une zone d'extrémité extérieure (36), pour ainsi projeter l'image virtuelle (20) sur la surface de représentation (16) ; et
- lorsqu'au moins une zone partielle de l'objet détecté est disposée dans une première partie de la zone d'extrémité extérieure (36), omet l'émission de lumière dans la première partie et, pendant ce temps, émet de la lumière dans une seconde partie de la zone d'extrémité extérieure (36) se raccordant à la première partie, pour ainsi projeter une partie d'image de l'image virtuelle (20) sur la surface de représentation (16), dans lequel le dispositif de projection (10) présente au moins un second élément de projection (38) disposé dans l'habitacle (12), lequel est conçu pour projeter une seconde image virtuelle (42) sur la surface de représentation (16), pendant que l'au moins un élément de projection (18) projette, au moyen de la lumière émise dans la seconde partie de la zone d'extrémité extérieure (36), la partie d'image de la première image virtuelle (20) sur la surface de représentation (16), moyennant quoi la seconde image virtuelle (42) complète la partie d'image projetée sur la surface de représentation (16) au moyen de l'au moins un élément de projection (18) pour former une image globale virtuelle (44) projetée sur la surface de représentation (16), dans lequel un levier sélecteur (48) est maintenu mobile sur la console centrale (26) pour sélectionner des rapports et/ou des paliers de vitesse d'une boîte de vitesses du véhicule automobile, et dans lequel le second élément de projection (38) est maintenu sur le levier sélecteur (48).
